# EUROPEAN PATENT APPLICATION

(11) **EP 1 162 234 A2**
(43) Date of publication of application: **12.12.2001**
(21) Application number: 01113980.5
(22) Date of filing: 08.06.2001
(51) Int. Cl.: C08L 67/04, B60R 21/20, B60R 21/00

(54) **Biodegradable vehicle components**

(30) Priority: 26.03.2001 US 817672; 09.06.2000 US 591638
(71) Applicant: TRW INC., Lyndhurst Ohio 44124 (US)
(72) Inventor: Shirk, Bryan W., Mesa, Arizona 85205 (US); Esterberg, Dean M., Tempe, Arizona 85284 (US); Swann, Timothy A., Mesa, Arizona 85215 (US); Van Wynsberghe, Roy D., Mesa, Arizona 85215 (US)
(74) Representative: Wagner, Karl H., Dipl.-Ing.

(57) **Abstract**

A vehicle component comprises a biodegradable material. The biodegradable material includes a polyhydroxyalkanoate resin.

## Description

### Field of the Invention

This application is a continuation in part of U.S. Patent Application 09/591,638, filed June 9, 2000 and assigned to assignee of the present invention.

The present invention relates to plastic components of a vehicle, and particularly relates to biodegradable polymer resins used to form plastic components of a vehicle.

### Background of the Invention

Plastic vehicle components such as seat padding, seat covers, floor padding, head liners, interior door panels, and bumpers are typically disposed in increasingly expensive landfill space. While recycling has sought to reduce the amount of plastic vehicle components disposed in landfills, the chemical nature of the polymers used to form plastic vehicle components limits the number of possible recycling applications. Repeated processing of polymers used to form plastic vehicle components results in the degradation of these polymers and the formation of plastic vehicle components that have poor mechanical properties. For example, chemically similar plastics with different molecular weights when mixed can potentially cause processing problems that make the reclaimed plastic inferior or unusable. Moreover, certain vehicle components, such as deployed air bags, are restricted by regulations from being recycled.

### Summary of the Invention

The present invention relates to a vehicle component comprising a biodegradable material. The biodegradable material includes a polyhydroxyalkanoate resin.

In a preferred embodiment, the present invention is a vehicle occupant protection apparatus. The vehicle occupant protection apparatus comprises a reaction canister and an inflatable vehicle occupant protection device. The inflatable vehicle occupant protection device is contained in the reaction canister. At least one of the reaction canister and the inflatable vehicle occupant protection device is biodegradable and comprises a polyhydroxyalkanoate resin.

### Brief Description of the Drawings

The foregoing and other features of the invention will become more apparent to one skilled in the art upon consideration of the following description of the invention and the accompanying drawings in which:
Fig. 1 is a schematic view of a motor vehicle including a vehicle occupant protection apparatus, a steering wheel, a floor assembly, an overhead assembly, a door assembly, a seat, and a bumper;
Fig. 2 is a schematic view of the vehicle occupant protection apparatus of Fig. 1 including an air bag;
Fig. 3 is a schematic view of the air bag of Fig. 2;
Fig. 4 is a schematic view of the steering wheel of Fig. 1;
Fig. 5 is a schematic view of the floor assembly of Fig. 1;
Fig. 6 is a schematic cross-sectional view of the overhead assembly of Fig. 1;
Fig. 7 is a schematic cross-sectional view of the door assembly of Fig. 1;
Fig. 8 is a schematic cross-sectional view of the seat of Fig. 1; and
Fig. 9 is a schematic cross-sectional view of the bumper of Fig. 1.

### Description of the Preferred Embodiment

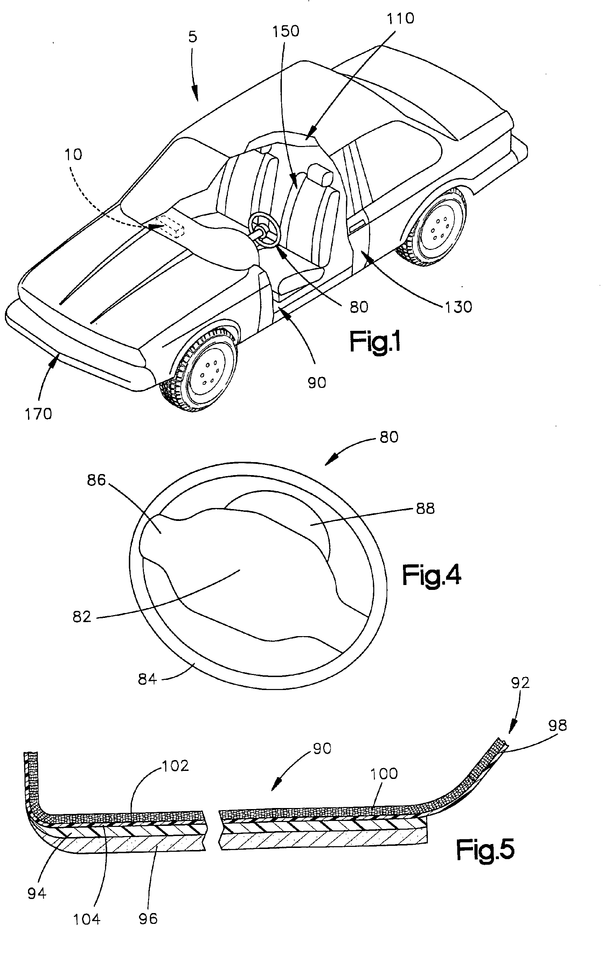

Fig. 1 illustrates a motor vehicle 5 in accordance with the present invention. The motor vehicle 5 includes at least one vehicle component that is made from a biodegradable material. By biodegradable material, it is meant the ability of a compound to be degraded completely into CO₂ and water or organic material by microorganisms and/or natural environmental factors. The biodegradable material of the vehicle component comprises a polyhydroxyalkanoate resin. The polyhydroxyalkanoate resin is a homo-polymer or copolymer having the following general structure for one or more of the hydroxyalkanoate monomer repeating units of the homo-polymer or copolymer: 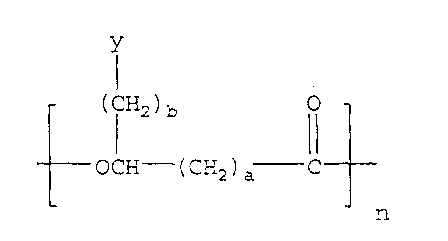 where a is 0 to 6, b is 0 to 15, Y is H, F, Cl, Br, CN, OH, CO₂H, CO₂R (where R is alkyl, benzyl, etc.), methyl, cyclohexyl, phenyl, p-nitrophenoxy, p-cyanophenoxy, phenoxy, acetoxy, vinyl, 2-propyl, 2-butyl, 2-pentyl, or 2-hexyl and n is an integer. The pendant groups of the repeating units may contain additional functionalization such as double bonds, epoxized double bonds, hydroxyl groups, alkyl groups, alkenyl groups, or combinations thereof. The polymer chain can contain up to 8 carbons in the repeating unit, and there may be additional functionalization in or on the main chain, such as double bonds, alkyl groups, alkenyl groups, hydroxyl groups, or combinations thereof.

Examples of hydroxyalkanoate monomers suitable for use in forming the polyhydroxyalkanoate homopolymers and copolymers are 3-hydroxyalkanoates such as 3-hydroxybutyrate, 3-hydroxyvalerate, and 3-hydroxyoctanoate, 4-hydroxyalkanoates such as 4-hydroxybutyrate, 5 hydroxyalkanoates such as 5-hydroxyvalerate and 5-hydroxycaproate, and 6-hydroxyalkanoates such as 6-hydroxycaproate, 6-hydroxycaprylate, and 6-hydroxypropionate.

The polyhydroxyalkanoate resin of the present invention can be synthesized chemically or biologically. A chemical approach involves the ring opening polymerization of β-lactone monomers shown below.

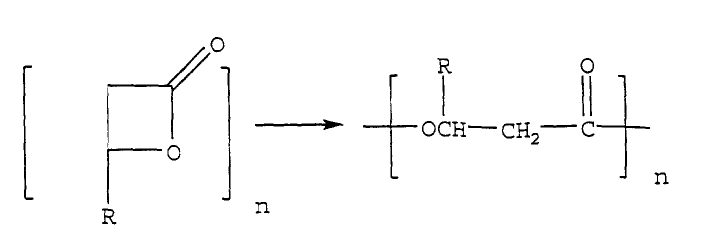

The polyhydroxyalkanoate resin can also be synthesized biologically in a plant or by a microorganism. Polyhydroxyalkanoate resins produced by a microorganism are typically in the form of a fermentation product. Numerous microorganisms are known in the art to be suitable for the production of polyhydroxyalkanoate resins. The microorganisms can be wild type or mutated or may have the necessary genetic material introduced into it, for example, by recombinant DNA technology.

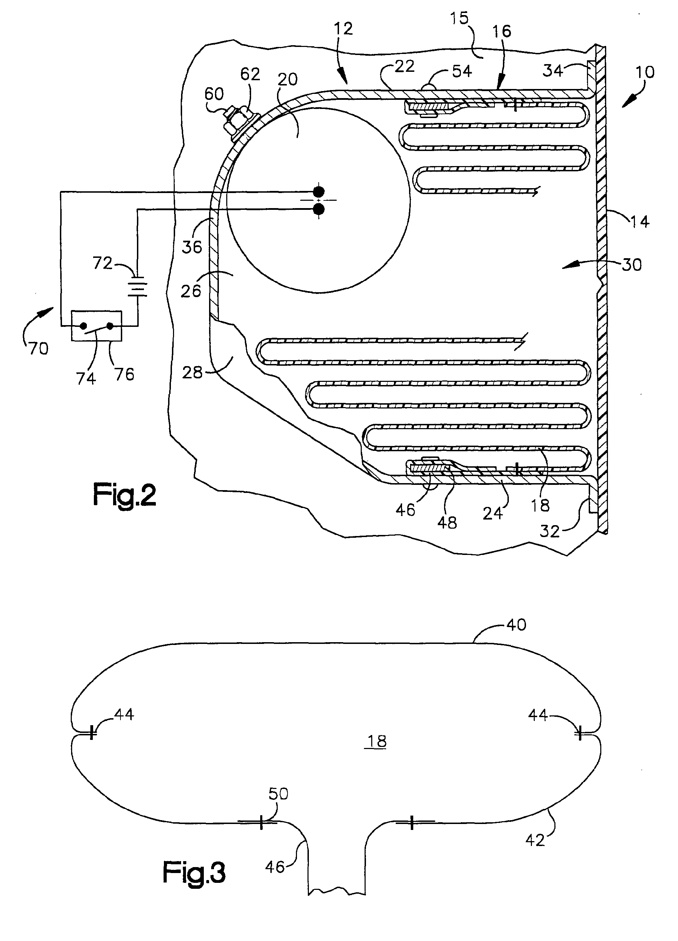

Referring to Fig. 2 a vehicle occupant protection apparatus 10 in accordance with the present invention. The vehicle occupant protection apparatus 10 includes an air bag module 12. The air bag module 12 is mounted in the motor vehicle 5 (Fig. 1) at a location adjacent to the vehicle occupant compartment, such as in the instrument panel 15 (Fig. 2) at the passenger side of the motor vehicle 5. The air bag module 12 could alternatively be mounted to another portion of the motor vehicle 5 such as the steering wheel, seat, or door. A deployment door 14 conceals the air bag module 12 from the vehicle occupant compartment.

The air bag module 12 includes a reaction canister 16, an inflatable vehicle occupant protection device 18, which is commonly referred to as an air bag, and an inflator 20 for inflating the air bag 18. The reaction canister 16 contains the air bag 18, in a deflated condition, and the inflator 20.

The reaction canister 16 has an upper wall 22, a lower wall 24, and a pair of opposite side walls 26 and 28. The upper, lower, and side walls 22, 24, 26, and 28 of the reaction canister together define a deployment opening 30 at the outer end of the reaction canister 16. A mounting flange portion 32 of the lower wall 28 projects downward from the deployment opening 30. A mounting flange portion 34 of the upper wall 22 projects upward from the deployment opening 30. An inner wall 36 closes the inner end of the reaction canister 16 opposite the deployment opening 30.

A plurality of mounting tabs (not shown) project from the reaction canister 16. The mounting tabs are fixed to corresponding supporting parts of the instrument panel 15 by fasteners (not shown). The structure and arrangement of the fasteners, the mounting tabs, and the supporting parts of the instrument panel 15 can vary, as known in the art. The reaction canister 16 is mounted in the instrument panel 15 in a position in which the deployment opening 30 is closely spaced from the instrument panel 15.

The reaction canister 16 is made from a biodegradable material. The biodegradable material of the reaction canister 16 comprises a polyhydroxyalkanoate resin. A preferred polyhydroxyalkanoate resin for use in forming the reaction canister is a polyhydroxyalkanoate that has a melting point temperature above about 120°C and a microstructure that is at least about 60% crystalline. A more preferred polyhyroxyalkanoate resin is poly(3-hydroxybutyrate). Poly(3-hydroxybutyrate) is a thermoplastic polymer. Poly(3-hydroxybutyrate has a microstructure that is about 70% crystalline, a melting point temperature of about 180°C, and a tensile strength of about 40 MPa.

Preferably, the biodegradable material used to form the reaction canister is reinforced with a biodegradable fiber so as to increase the tensile strength of the reaction canister. The biodegradable material is reinforced with the biodegradable fibers by forming a composite of the polyhydroxyalkanoate resin and biodegradable fibers. In the composite, the polyhydroxyalkanoate resin acts a continuous matrix that surrounds and binds the biodegradable fibers.

Biodegradable fibers suitable for use in the present invention can be natural fibers (i.e., fibers from a biological source) or synthetic fibers. Examples of natural fibers are cellulose based fibers such as cotton or wood pulp and protein based fibers such as wool or silk. Examples of synthetic fibers are polyvinyl alcohol fibers, polyhydroxyalkanoate fibers (described below) and carbon fibers. A preferred biodegradable fiber is cotton fiber.

The biodegradable fibers incorporated into the continuous matrix of polyhydroxyalkanoate resin can be continuous fibers or discontinuous fibers. Continuous fibers have fiber lengths greater than about 6 mm. The continuous fibers can be oriented in the polyhydroxyalkanoate resin matrix in the same direction. Alternatively, the continuous fibers can be woven together, or bound together in the form of non-woven webs. Discontinuous fibers have an average diameter of about 1 µm to about 1 mm and a length less than about 6 mm. The discontinuous fibers can be oriented in the same direction, in a random direction or bonded together in the form of webs.

The amount of biodegradable fiber used to reinforce the polyhydroxyalkanoate resin of the reaction canister is that amount sufficient to increase the tensile strength of the reaction canister. A preferred amount of biodegradable fiber used to reinforce the polyhydroxyalkanoate resin is from about 20% to about 70% by weight based on the combined weight of the polyhydroxyalkanoate resin and the biodegradable fiber. A more preferred amount of biodegradable fiber used to reinforce the polyhydroxyalkanoate is from about 40% to about 70% by weight based on the combined weight of the polyhydroxyalkanoate and the biodegradable fiber

The reaction canister 16 is formed by molding the polyhydroxyalkanoate resin and the biodegradable fiber (if used). Examples of molding techniques that can be used it the present invention include injection molding, compression molding, blow molding, vacuum molding, extrusion molding, and co-extrusion molding. Preferred techniques for molding the polyhydroxyalkanoate resin and the biodegradable fiber into the reaction canister are injection molding and compression molding. In compression molding, granular polyhydroxyalkanoate resin and biodegradable fiber are placed in a mold having the configuration of the reaction canister and heated to a temperature sufficient to melt the polyhydroxyalkanoate resin. The melted polyhydroxyalkanoate resin and biodegradable fiber is then compressed mechanically or by a high pressure means to the configuration of the reaction canister. Alternatively, the granular polyhydroxyalkanoate resin and biodegradable fiber may be extruded from a conventional extruder in the form of a flat sheet. The flat sheet of polyhydroxyalkanoate resin and biodegradable fiber is then compression molded into the configuration of the reaction canister.

In injection molding, granular polyhydroxyalkanoate resin and biodegradable fiber (if used) are fed into one end of a heated cylinder and heated to a temperature above the melting point temperature of the polyhydroxyalkanoate resin. The melted polyhydroxyalkanoate resin and biodegradable fiber are ejected through an orifice by a plunger means into a mold having the configuration of the reaction canister.

The reaction canister so formed from the polyhydroxyalkanoate resin is neither brittle at a temperature of about -40°C nor capable of losing its shape or configuration at a temperature of about 90°C when subjected to pressures up to about 6,000 psi.

As noted above, the air bag 18 is stored in the reaction canister 16 in a deflated condition. Fig. 3 is a schematic view of the air bag 18 of the present invention. The air bag 18 as shown in Fig. 3 is formed from two separate panels, i.e., from a front panel 40 and a back panel 42. The panels 40 and 42 are attached together at a side seam 44 to form the air bag 18. The panels 40 and 42 define the inflation fluid volume in the air bag 18. As shown in Fig. 1 and Fig. 2, a tubular attachment panel or retainer panel 46 connects the air bag 18 with a retainer ring 48. The retainer panel 46 is attached to the back panel 42 at a retainer seam 50.

The retainer ring 48 extends fully around the inside of the reaction canister 16 at a location between the inflator 12 and the deployment opening 30. A plurality of fasteners 54 securely fasten the retainer ring 48, and hence the retainer panel 46 of the air bag 18, to the surrounding walls 22, 24, 26, and 28 of the reaction canister 16 at that location.

In accordance with the present invention, the panels 40, 42, and 46 are made from a biodegradable fabric. The biodegradable fabric comprises a polyhydroxyalkanoate resin. A preferred polyhydroxyalkanoate resin suitable for use in the biodegradable fabric is a polyhydroxyalkanoate resin that has a melting point temperature above about 120°C and a microstructure that is less than about 50% crystalline. A more preferred polyhyroxyalkanoate resin is poly(3-hydroxybutyrate-co-3-hydroxyvalerate). Poly(3-hydroxybutyrate-co-3-hydroxyvalerate) is a copolymer of 3-hydroxybutyrate and 3-hydroxyvalerate. Poly(3-hydroxybutyrate-co-3-hydroxyvalerate) has a microstructure that is less than about 40% crystalline, a melting point temperature greater than 120°C, , and a tensile strength of 30 MPa.

The biodegradable fabric is prepared by processing the polyhydroxyalkanoate resin into fibers. The polyhydroxyalkanoate resins are processed into fibers using a variety of fiber forming techniques, such as melt spinning, dry spinning, and wet spinning.

In melt spinning, the polyhydroxyalkanoate resin is heated above its melting point and the molten polyhydroxyalkanoate resin is forced through a spinneret to form fibers. A spinneret is a die with a multitude of small orifices, which are varied in number, size, and shape. The fibers produced by melt spinning are then cooled in a cooling zone.

In dry spinning, the polyhydroxyalkanoate resin is dissolved in a solvent, and the solution of polyhydroxyalkanoate resin is extruded under pressure through a spinneret. The fibers by dry spinning are then passed through a heating zone where the solvent is evaporated and the fibers are solidified.

In wet spinning, the polyhydroxyalkanoate resin is also dissolved in a solvent, and the solution of polyhydroxyalkanoate is forced through a spinneret, which is submerged in a coagulation bath. As the solution of polyhydroxyalkanoate emerges from the spinneret orifices within the coagulation bath, polyhydroxyalkanoate resin is either precipitated or chemically regenerated in the form of fibers.

The polyhydroxyalkanoate fibers formed by melt spinning, dry spinning, or wet spinning are then drawn by stretching and attenuating the polyhydroxyalkanoate fibers. The stretching and attenuating of the polyhydroxyalkanoate fibers induces molecular orientation of the crystalline and amorphous segments within the polyhydroxyalkanoate fibers. The inducement of molecular orientation within the polyhydroxyalkanoate fibers increases the tensile strength of the polyhydroxyalkanoate fibers.

The polyhydroxyalkanoate fibers can be interlaced and wound up as a multifilament yarn. The multifilament yarn of polyhydroxyalkanoate fibers is then woven into the fabric of the present invention. Weaving of the multifilament yarn is performed using a known weaving apparatus, such as a water-jet loom or a rapier loom. The woven fabric construction is preferably a plain weave, with a substantially balanced square sett. The number of multifilament yarns in the warp and fill directions is selected in accordance with weaving industry standards for woven air bags.

The woven fabric of polyhydroxyalkanoate resin is preferably uncoated. The woven fabric of polyhydroxyalkanoate resin can be coated with a film comprising a biodegradable elastomer or biodegradable thermoplastic such as cellulose acetate butyrate, polyvinyl alcohol, and polyhydroxyalkanoate resins.

Alternatively, the polyhydroxyalkanoate fibers are formed into a non-woven web. The non-woven web can have an oriented configuration such as a lattice pattern or a random configuration. The polyhydroxyalkanoate fibers can be configured by a variety of web making procedures such as carding, air-laying, and wet-forming, all of which are known in the art. In carding, clumps of polyhydroxyalkanoate fibers are separated mechanically into individual fibers and formed into a coherent web by the mechanical action of moving beds of spaced needles. In the air laying process, polyhydroxyalkanoate fibers are separated by teeth or needles and introduced into an airstream that randomly orients the fibers on a screen. In wet-forming, polyhydroxyalkanoate fibers are continuously dispersed in a large volume of water and caught on a moving wire screen. The polyhydroxyalkanoate fibers caught on the screen are then dried.

The polyhydroxyalkanoate fibers of the web are bonded together to form the biodegradable fabric of the present invention. The bonding of the polyhydroxyalkanoate fibers can be performed using mechanical means. Examples of mechanical means of bonding polyhydroxyalkanoate fibers are pressing the fibers with a hydraulic press and heating the polyhydroxyalkanoate fibers to a temperature above the melting point of the polyhydroxyalkanoate fibers. Alternatively, the bonding of the polyhydroxyalkanoate fibers of the web can be performed by chemical means. An example of chemical means is applying a biodegradable binder in the form of a coating or film to the web of polyhydroxyalkanoate fibers.

The woven or non-woven biodegradable fabric so formed from the polyhydroxyalkanoate resin has a Mullen burst strength of at least about 1,500 psi and an elastic modulus of about 10,000 psi to about 400,000 psi. A biodegradable fabric with a Mullen burst strength of at least about 1,500 provides the air bag with sufficient mechanical strength to withstand rapid inflation of air bag by inflation fluid from the inflator. An elastic modulus of about 10,000 psi to about 400,000 psi provides the air bag with sufficient flexibility to be stored in a compact condition.

Referring to Fig. 2, the inflator 20 is an elongated cylindrical structure comprising a source of inflation fluid for inflating the air bag. As known in the art, the inflator 20 may contain an ignitable gas generating material, which when ignited rapidly generates a large volume of gas. The inflator 20 may alternatively contain a stored quantity of pressurized inflation fluid and ignitable gas generating or heat generating material.

The inflator 20 extends longitudinally between the opposite side walls 26 and 28 of the reaction canister 16. A threaded mounting stud 60 on the inflator 20 projects radially outward through an opening (not shown) in the inner wall 34 of the reaction canister 16. A nut 62 on the mounting stud 60 attaches the inflator 20 securely to the reaction canister 16. Alternatively, the inflator 20 could be mounted in the reaction canister 16 by any other mounting structure known in the art.

The inflator 20 is included in an electrical circuit 70. The electrical circuit 70 further includes a power source 72, which is preferably the vehicle battery and/or a capacitor, and a normally open switch 74. The switch 74 is part of a sensor 76 that senses a condition indicating the occurrence of a vehicle collision. The collision indication condition may comprise, for example, sudden vehicle deceleration caused by a collision. If the collision indicating condition is above a predetermined threshold, it indicates the occurrence of a collision for which inflation of the air bag 18 is desired to protect an occupant of the vehicle. The sensor 76 then closes the switch 74, and the inflator 20 is actuated electrically.

When the inflator 20 is actuated, it emits a large volume of inflation fluid into the reaction canister 16. The reaction canister 16 directs inflation fluid from the inflator 20 into the air bag 18 to inflate the air bag 18 from the deflated condition of Fig. 1 to an inflated condition (Fig. 2). As the air bag 18 begins to inflate, it moves outward from the reaction canister 16 through the deployment opening 30. The air bag then moves forcefully against the deployment door 14 to open the deployment door 14, and continues to move outward into the vehicle occupant compartment to help protect the vehicle occupant from forcefully striking the instrument panel or other parts of the motor vehicle 5.

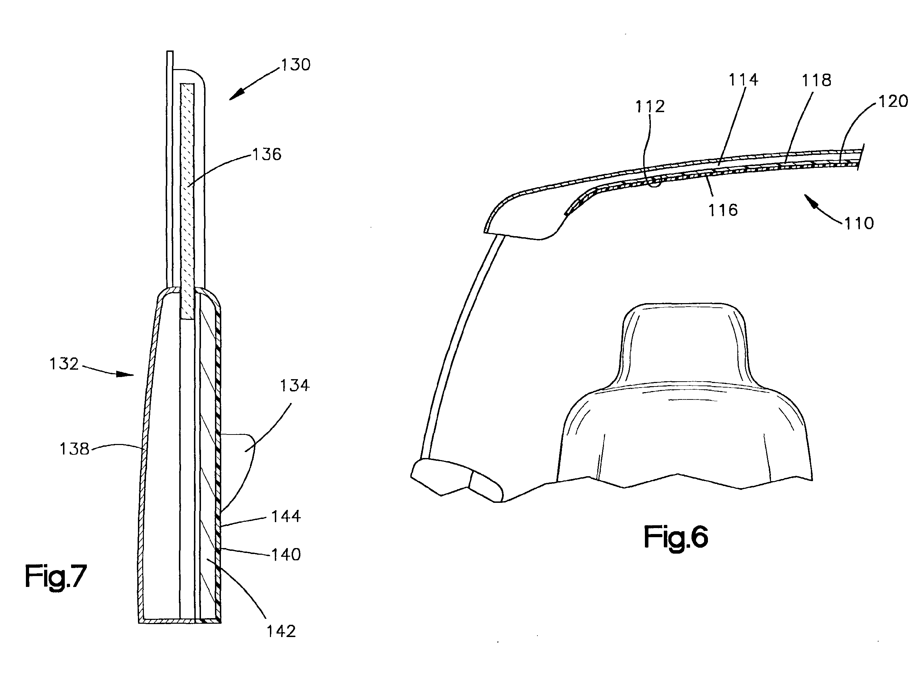

Fig. 4 illustrates a steering wheel 80 in accordance with the present invention. The steering wheel 80 comprises a central hub 82, a rim 84 that encircles the central hub 82, and spokes 86 that connect the rim 84 to the hub 82. The hub 82 is connected to a steering column 88 that secures the steering wheel 80 to the motor vehicle 5.

The steering wheel 80 is formed by connecting steering wheel padding material to a metal steering wheel armature (not shown). The steering wheel padding material is formed from a biodegradable cellular material. The biodegradable cellular material comprises a polyhydroxyalkanoate resin. A preferred polyhydroxyalkanoate resin suitable for use in forming the biodegradable cellular material is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

Polyhydroxyoctanoate has a microstructure that is about 25% crystalline, a metal melting point of greater than about 60°C, and a tensile strength of about 10 MPa. Poly(3-hydroxybutyrate-co-3-hydroxyvalerate) is a copolymer of 3-hydroxybutyrate and 3-hydroxyvalerate. Poly(3-hydroxybutyrate-co-3-hydroxyvalerate) has a microstructure that is less than about 40% crystalline, a melting point temperature greater than 120°C, and a tensile strength of 30 MPa.

The steering wheel padding material is made by injection molding the polyhydroxyalkanoate resin with a blowing agent. Examples of blowing agents that can be used in forming the steering wheel padding material include halogenated hydrocarbons such as trichlorofluoromethane, dichlorofluoromethane, and methylene chloride, pentane, sodium bicarbonate, ammonium carbonate, and gases such as air, carbon dioxide, and nitogen. Additional materials such as foam stabilizers, fillers, flame retardants, ultraviolet absorbers, antioxidants, and scorch preventing agents can also be combined with the polyhydroxyalkanoate to improve the mechanical properties of the steering wheel padding material.

When a solid or liquid is used as the blowing agent, the polyhydroxyalkanoate resin, the blowing agent, and the additional materials (if utilized) are fed into one end of a heated cylinder and heated to a temperature above the melting point temperature of the polyhydroxyalkanoate resin. Heating of the mixture causes the solid or liquid blowing agent to form a gas that foams the melted polyhydroxyalkanoate. The foamed polyhydroxyalkanoate is ejected through an orifice by a plunger or screw means into a mold having the configuration of the steering wheel padding material. The ejected polyhydroxyalkanoate is cooled, and a biodegradable cellular material is formed with the shape of the steering wheel padding material.

When a gas is used as the blowing agent, the polyhydroxyalkanoate resin and the additional materials (if utilized) are fed into one end of a heated cylinder and heated to a temperature above the melting point temperature of the polyhydroxyalkanoate resin. The gas is then injected into the melted polyhydroxyalkanoate resin, causing the polyhydroxyalkanoate resin to foam. The foamed polyhydroxyalkanoate is ejected through an orifice by a plunger or screw means into a mold having the configuration of the steering wheel padding material. The ejected polyhydroxyalkanoate is cooled, and a biodegradable cellular material is formed with the shape of the steering wheel padding material.

Fig. 5 illustrates a floor assembly 90 in accordance with the present invention. The floor assembly 90 is connected to the floor of the vehicle occupant compartment of the motor vehicle 5. The floor assembly 90 includes a carpet 92, a carpet padding layer 94, and a floor cushion 96. The carpet 92, as illustrated, is of a conventional tufted construction and includes a backing 98 and pile yarns 100 that are secured to the backing 98. The pile yarns 100 extend from the backing 98 to form a pile surface 102 on the front of the carpet 92.

The pile yarns 100 are formed by interlacing biodegradable fibers. Biodegradable fibers suitable for use in forming the pile yarns 100 can be natural fibers (i.e., fibers from a biological source) or synthetic fibers. Examples of natural fibers that can be used in forming the pile yarns 100 of the present invention are cellulose based fibers, such as cotton or wood pulp, and protein based fibers, such as wool or silk. Examples of synthetic fibers that can be used in forming the pile yarns 100 are polyvinyl alcohol fibers, polyhydroxyalkanoate fibers and carbon fibers.

A preferred biodegradable fiber is a polyhydroxyalkanoate fiber. Preferably, the polyhydroxyalkanoate fiber is prepared from a polyhydroxyalkanoate resin that has a melting point temperature above about 120°C and a microstructure that is less than about 50% crystalline. A more preferred polyhyroxyalkanoate fiber is polyhydroxyalkanoate resin selected from the group consisting of poly(3-hdyroxybutyrate) and poly(3-hydroxybutyrate-co-3-hydroxyvalerate).

The polyhydroxyalkanoate fiber is prepared from the polyhydroxyalkanoate resin using a variety of fiber forming techniques, such as melt spinning, dry spinning, and wet spinning. The polyhydroxyalkanoate fibers formed by melt spinning, dry spinning, or wet spinning are then drawn by stretching and attenuating the polyhydroxyalkanoate fibers. Stretching and attenuating of the polyhydroxyalkanoate fibers induces molecular orientation of the crystalline and amorphous segments within the polyhydroxyalkanoate fibers. The inducement of molecular orientation within the polyhydroxyalkanoate fibers increases the tensile strength of the polyhydroxyalkanoate fibers.

The backing 98 is formed from a woven or non-woven biodegradable material. The woven or non-woven biodegradable material includes a polyhydroxyalkanoate fiber that is formed from a polyhydroxyalkanoate resin. A preferred polyhydroxyalkanoate resin used to form the polyhydroxyalkanoate fiber has a melting point temperature above about 120°C and a microstructure that is less than about 50% crystalline. A more preferred polyhyroxyalkanoate fiber is polyhydroxyalkanoate resin selected from the group consisting of poly(3-hdyroxybutyrate) and poly(3-hydroxybutyrate-co-3-hydroxyvalerate).

The polyhydroxyalkanoate fibers used to form the backing 98 can be interlaced and wound up as a multifilament yarn. The multifilament yarn of polyhydroxyalkanoate fibers is then woven into the backing 98. The woven backing 98 can be coated with a film comprising a biodegradable elastomer or biodegradable thermoplastic, such as cellulose acetate butyrate, polyvinyl alcohol, and polyhydroxyalkanoate resins. Alternatively, the polyhydroxyalkanoate fibers can be formed into a non-woven web and bonded together to form the backing 98 of the present invention.

In order to adhere and lock the pile yarns 100 more securely to the backing 98, the carpet 92 may further include a suitable binder coating (not shown), as is conventional in the manufacture of tufted carpets.

The carpet padding layer 94 of the floor assembly 90 is adhered firmly to a rear surface 104 of the backing 98 and extends substantially over the entire surface of the backing 98. The carpet padding layer 94 imparts stiffness and moldability to the floor assembly 90 so that the floor assembly 90 can be molded into a desired configuration conforming to the contours of the floor of the motor vehicle 5. The carpet padding layer 94 also serves to impart sound deadening properties so as to reduce the level of noise in the vehicle occupant compartment of the motor vehicle 5.

The carpet padding layer 94 is made from biodegradable material. The biodegradable material comprises a polyhydroxyalkanoate resin. A preferred polyhydroxyalkanoate resin suitable for use in forming the carpet padding layer 94 is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

The biodegradable material used to make the carpet padding layer 94 also includes a filler material. The filler material can be any filler material that when combined with the polyhyroxyalkanoate resin improves the noise absorption of the carpet padding layer 94 but does not substantially retard the biodegradability of the biodegradable material. Preferred fillers include naturally occurring minerals, such as calcium carbonate and calcium sulfate.

The carpet padding layer 94 is formed by mixing the polyhyroxyalkanoate resin with the filler and molding mixture of the polyhydroxyalkanoate resin and the filler. Preferred techniques for molding the polyhydroxyalkanoate resin and the filler into the carpet padding layer 94 are injection molding and compression molding.

The floor cushion 96 is bonded to the carpet padding layer 94 and provides cushioning as well as thermal and sound insulation to the floor assembly 90. The floor cushion 96 is formed from a biodegradable cellular material. The biodegradable cellular material comprises a polyhydroxyalkanoate resin. A preferred polyhydroxyalkanoate resin suitable for use in forming the biodegradable cellular material is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

The floor cushion 96 is preferably formed by injection molding a mixture of the polyhydroxyalkanoate resin and a blowing agent. Optionally, a filler may be mixed with the polyhydroxyalkanoate resin and the blowing agent to vary the weight and density of the floor cushion for optimum acoustical and cushioning properties.

Fig. 6 illustrates an overhead assembly 110 in accordance with the present invention. The overhead assembly 110 is attached to an interior surface 112 of the roof 114 of the motor vehicle 5. The overhead assembly 110 includes an overhead cover 116 and an overhead padding layer 118.

The overhead cover 116 comprises a woven or non-woven biodegradable fabric. The woven or non-woven biodegradable material includes a polyhydroxyalkanoate fiber that is formed from polyhydroxyalkanoate resin.

A preferred polyhydroxyalkanoate resin used to form the polyhydroxyalkanoate fiber has a melting point temperature above about 120°C and a microstructure that is less than about 50% crystalline. A more preferred polyhyroxyalkanoate fiber is polyhydroxyalkanoate resin selected from the group consisting of poly(3-hdyroxybutyrate) and poly(3-hydroxybutyrate-co-3-hydroxyvalerate).

The polyhydroxyalkanoate fibers can be interlaced and wound up as a multifilament yarn. The multifilament yarn of polyhydroxyalkanoate fibers is then woven into the biodegradable fabric of the overhead cover 116. The woven biodegradable fabric of polyhydroxyalkanoate resin can be coated with a film comprising a biodegradable elastomer or biodegradable thermoplastic, such as cellulose acetate butyrate, polyvinyl alcohol, and polyhydroxyalkanoate resins. Alternatively, the polyhydroxyalkanoate fibers can be formed into a non-woven web and bonded together to form the overhead cover 116 of the present invention.

The overhead padding layer 118 is bonded to an interior surface 120 of the overhead cover 116 and provides thermal and sound insulation to the overhead assembly 110.

The overhead padding layer 118 is made from biodegradable material. The biodegradable material comprises a polyhydroxyalkanoate resin. A preferred polyhydroxyalkanoate resin for use in forming the overhead padding layer 118 is a polyhydroxyalkanoate resin that has a melting point temperature above about 120°C and a microstructure that is at least about 60% crystalline. A more preferred polyhyroxyalkanoate resin is poly(3-hydroxybutyrate).

The biodegradable material used to form the overhead padding layer 116 can also includes a filler material. The filler material can be any filler material that when combined with the polyhyroxyalkanoate resin improves the sound absorption properties of the overhead padding layer 116 but does not substantially retard the biodegradability of the biodegradable material. Preferred fillers include naturally occurring minerals, such as calcium carbonate and calcium sulfate.

The overhead padding layer 116 is formed by mixing the polyhyroxyalkanoate resin with the filler and molding the mixture of polyhydroxyalkanoate resin and the filler. Preferred techniques for molding the polyhydroxyalkanoate resin and the filler into the plastic layer are injection molding and compression molding.

Fig. 7 illustrates a door assembly 130 in accordance with the present invention. The door assembly 130 includes a door 132, an arm rest 134, and a window 136. The door 132 includes an exterior door panel 138 and an interior door panel 140.

The exterior door panel 138 is made from a biodegradable material. The biodegradable material of the exterior door panel 138 comprises a polyhydroxyalkanoate resin. A preferred polyhydroxyalkanoate resin for use in forming the exterior door panel 138 is a polyhydroxyalkanoate resin that has a melting point temperature above about 120°C and a microstructure that is at least about 60% crystalline. A more preferred polyhyroxyalkanoate resin is poly(3-hydroxybutyrate).

Preferably, the exterior door panel 138 also includes a biodegradable fiber that reinforces the exterior door panel 138 and increases the tensile strength of the exterior door panel 138. The exterior door panel 138 is reinforced with the biodegradable fibers by forming a composite of the polyhydroxyalkanoate resin and biodegradable fibers. In the composite, the polyhydroxyalkanoate resin acts as a continuous matrix that surrounds and binds the biodegradable fibers.

Biodegradable fibers suitable for use in the exterior door panel 138 of the present invention can be natural fibers (i.e., fibers from a biological source) or synthetic fibers. Examples of natural fibers are cellulose based fibers, such as cotton or wood pulp, and protein based fibers, such as wool or silk. Examples of synthetic fibers are polyvinyl alcohol fibers, polyhydroxyalkanoate fibers (described below) and carbon fibers. A preferred biodegradable fiber is polyhydroxyalkanoate fiber

The biodegradable fibers incorporated into the continuous matrix of polyhydroxyalkanoate resin can be continuous fibers or discontinuous fibers. The continuous fibers can be oriented in the polyhydroxyalkanoate resin matrix in the same direction. Alternatively, the continuous fibers can be woven together, or bound together in the form of non-woven webs. The discontinuous fibers can be oriented in the same direction, in a random direction or bonded together in the form of webs.

The exterior door panel 138 is formed by molding the polyhydroxyalkanoate resin and the biodegradable fiber (if used). Preferred techniques for molding the polyhydroxyalkanoate resin and the biodegradable fiber into the exterior door panel 116 are injection molding and compression molding.

The interior trim panel 140 comprises a biodegradable material. The biodegradable material includes a polyhydroxyalkanoate resin. A preferred polyhydroxyalkanoate resin suitable for use in forming the biodegradable material of the interior trim panel 140 is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

The interior trim panel is formed by molding the polyhydroxyalkanoate resin. Preferred techniques for molding the polyhydroxyalkanoate resin and the biodegradable fiber into the interior trim panel are injection molding and compression molding.

Optionally, an interior surface 144 of the interior trim panel 140 can be coated with a biodegradable latex coating to color the interior trim panel 140 and provide the interior trim panel 140 with a desired finish. Preferably, the biodegradable latex coating comprises a polyhydroxyalkanoate latex formed from polyhydroxyalkanoate resins.

The door 132 also includes a door padding layer 142 that is interposed between the interior trim panel 140 and the exterior door panel 138. The door padding layer 142 imparts sound deadening properties so as to reduce the level of noise in the vehicle occupant compartment of the motor vehicle 5.

The door padding layer 142 is made from biodegradable material. The biodegradable material comprises a polyhydroxyalkanoate resin. A preferred polyhydroxyalkanoate resin suitable for use in forming the door padding layer 142 is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

Preferably, the biodegradable material used to make the door padding layer 142 also includes a filler material. The filler material can be any filler material that when combined with the polyhyroxyalkanoate resin improves the noise absorption of the door padding layer 144 but does not substantially retard the biodegradability of the biodegradable material. Preferred fillers include naturally occurring minerals, such as calcium carbonate and calcium sulfate.

The door padding layer 142 is formed by mixing the polyhyroxyalkanoate resin with the filler and molding mixture of the polyhydroxyalkanoate resin and the filler. Preferred techniques for molding the polyhydroxyalkanoate resin and the filler into the door padding layer 142 are injection molding and compression molding.

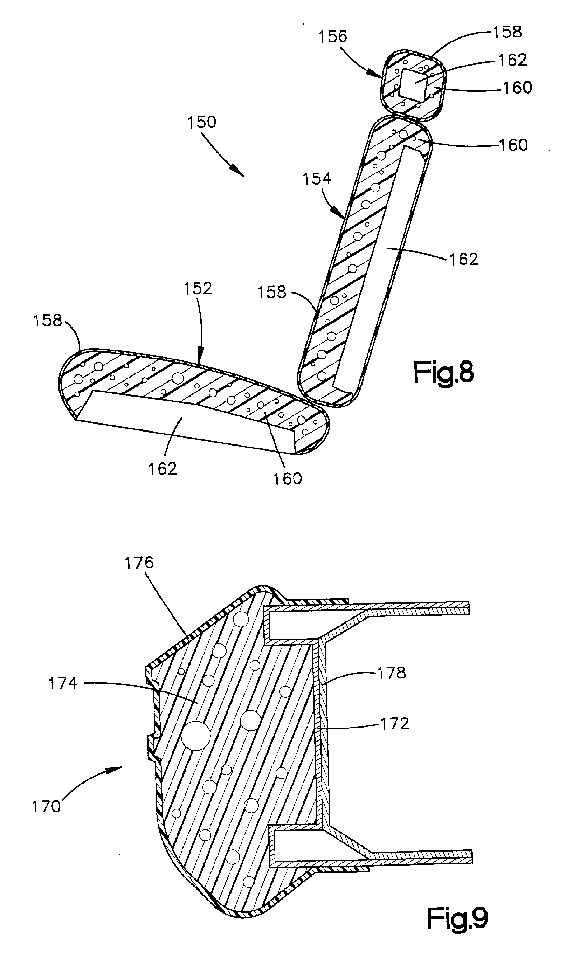

Fig. 8 illustrates a vehicle seat 150 in accordance with the present invention. The vehicle seat 150 includes a seat bottom 152, a seat back 154, and a head rest 156. Each of the seat bottom 152, the seat back 154, and the head rest 156 comprise a seat cover 158, a seat cushion 160, and a metal frame 162. The metal frame 162 supports the seat cushion 160 and seat cover 158.

The seat cover 158 comprises a woven or non-woven biodegradable fabric. The woven or non-woven biodegradable material includes a polyhydroxyalkanoate fiber that is formed from polyhydroxyalkanoate resin.

A preferred polyhydroxyalkanoate resin used to form the polyhydroxyalkanoate fiber has a melting point temperature above about 120°C and a microstructure that is less than about 50% crystalline. A more preferred polyhyroxyalkanoate fiber is polyhydroxyalkanoate resin selected from the group consisting of polyhdyroxybutyrate and poly(3-hydroxybutyrate-co-3-hydroxyvalerate).

The polyhydroxyalkanoate fibers can be interlaced and wound up as a multifilament yarn. The multifilament yarn of polyhydroxyalkanoate fibers is then woven into the seat cover 158. The woven seat cover 158 of polyhydroxyalkanoate resin can be coated with a film comprising a biodegradable elastomer or biodegradable thermoplastic, such as cellulose acetate butyrate, polyvinyl alcohol, and polyhydroxyalkanoate resins. Alternatively, the polyhydroxyalkanoate fibers can be formed into a non-woven web and bonded together to form the seat cover 158 of the present invention.

The seat cushions 160 are bonded to seat covers 158. The seat cushions 160 are formed from a biodegradable cellular material. The biodegradable cellular material comprises a polyhydroxyalkanoate resin. A preferred polyhydroxyalkanoate resin suitable for use in forming the biodegradable cellular material is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

The seat cushion is preferably formed by injection molding a mixture of the polyhydroxyalkanoate resin and a blowing agent into the configuration of the seat bottom 152, seat back 154, and head rest 156. Optionally, a filler may be mixed with the polyhydroxyalkanoate resin and the blowing agent to vary the weight and density of the seat cushioning properties.

Fig. 9 illustrates a vehicle bumper 170 in accordance with the present invention. The vehicle bumper 170 includes an elongated mounting means 172 and an energy absorber 174. The mounting means 172 is a metal cross beam adapted to secure the vehicle bumper 170 to an end portion 178 of the motor vehicle 5. The mounting means 172 also supports the energy absorber 174.

The energy absorber 174 is a material designed to absorb impact energy. The energy absorber 174 comprises a high-density biodegradable cellular material. The biodegradable plastic cellular material comprises a polyhydroxyalkanoate resin. A preferred polyhydroxyalkanoate resin suitable for use in forming the biodegradable cellular material of the energy absorber 174 is a polyhydroxyalkanoate resin that has a melting point temperature above about 60°C and a microstructure that is less than about 50% crystalline. A more preferred polyhyroxyalkanoate resin is selected from the group consisting of polyhydroxyoctanoate and poly(3-hydroxybutyrate-co-3-hydroxyvalerate).

The energy absorber 174 is preferably formed by injection molding a mixture of the polyhydroxyalkanoate resin and a blowing agent. Optionally, a filler can be mixed with the polyhydroxyalkanoate resin and the blowing agent to vary the weight and density of the energy absorber 174 for modifying the impact absorbing properties.

The vehicle bumper 170 also includes an elongated shell 176 disposed adjacent to the mounting means 172 and about the energy absorber 174. The shell 176 is made from a biodegradable material. The biodegradable material of the shell 176 comprises a polyhydroxyalkanoate resin. A preferred polyhydroxyalkanoate resin for use in forming the shell is a polyhydroxyalkanoate that has a melting point temperature above about 120°C and a microstructure that is at least about 60% crystalline. A more preferred polyhyroxyalkanoate resin is poly(3-hydroxybutyrate).

Preferably, the shell 176 also includes a biodegradable fiber that reinforces and increases the tensile strength of the shell 176. The shell 176 is reinforced with the biodegradable fibers by forming a composite of the polyhydroxyalkanoate resin and biodegradable fibers. In the composite, the polyhydroxyalkanoate resin acts a continuous matrix that surrounds and binds the biodegradable fibers.

Biodegradable fibers suitable for use in the present invention can be natural fibers (i.e., fibers from a biological source) or synthetic fibers. Examples of natural fibers are cellulose based fibers, such as cotton or wood pulp, and protein based fibers, such as wool or silk. Examples of synthetic fibers are polyvinyl alcohol fibers, polyhydroxyalkanoate fibers (described below) and carbon fibers. A preferred biodegradable fiber is a polyhydroxyalkanoate fiber.

The biodegradable fibers incorporated into the continuous matrix of polyhydroxyalkanoate resin can be continuous fibers or discontinuous fibers. The continuous fibers can be oriented in the polyhydroxyalkanoate resin matrix in the same direction. Alternatively, the continuous fibers can be woven together, or bound together in the form of non-woven webs. The discontinuous fibers can be oriented in the same direction, in a random direction or bonded together in the form of webs.

The shell 176 is formed by molding the polyhydroxyalkanoate resin and the biodegradable fiber (if used). Preferred techniques for molding the polyhydroxyalkanoate resin and the biodegradable fiber into the shell 176 are injection molding and compression molding.

From the above description of the invention those skilled in the art will perceive, improvements, changes, and modifications in the invention. Such improvements, changes and modifications within the skill of the art are intended to be covered by the appended claims.

It should be noted that the objects and advantages of th invention may be attained by means of any compatible combination(s) particularly pointed out in the items of the following summary of the invention.

### SUMMARY OF THE INVENTION

1. A vehicle component comprising a biodegradable material, said biodegradable material including a polyhydroxyalkanoate resin.
2. The vehicle component of item 1 wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate.
3. The vehicle component of item 1 wherein the vehicle component is made from a composite, the composite comprising a continuous matrix of the polyhydroxyalkanoate resin reinforced with a biodegradable fiber.
4. The vehicle occupant component of item 3 wherein the biodegradable fiber comprises a continuous fiber or a discontinuous fiber.
5. The vehicle component of item 3 wherein the biodegradable fiber comprises one of a plurality of continuous fibers and the continuous fibers are woven together.
6. The vehicle component of item 3 wherein the biodegradable fiber comprises one of a plurality of discontinuous fibers and the discontinuous fibers are bonded together to form a web.
7. The vehicle component of item 3 wherein the biodegradable fiber is a natural fiber or synthetic fiber.
8. The vehicle component of item 3 wherein the polyhydroxyalkanoate resin is a poly(3-hydroxybutyrate).
9. The vehicle component of item 3 wherein the biodegradable fiber is cotton.
10. The vehicle component of item 1 wherein the polyhydroxyalkanoate resin is in the form of polyhydroxyalkanoate fibers.
11. The vehicle component of item 10 wherein the polyhydroxyalkanoate fibers are woven or bonded together to form a biodegradable fabric.
12. The vehicle component of item 10 wherein the polyhydroxyalkanoate resin is selected from group consisting of poly(3-hydroxybutyrate-co-3-hydroxyvalerate) polyhydroxyoctanoate.
13. The vehicle component of item 1 wherein the biodegradable material is a biodegradable cellular material.
14. The vehicle component of item 1 wherein the biodegradable material further comprises a filler material.
15. The vehicle component of item 14 wherein the filler material imparts sound deadening properties to the biodegradable material.
16. The vehicle component of item 14 wherein the filler material is a naturally occurring mineral.
17. A vehicle occupant protection apparatus comprising:
   a reaction canister; and
   an inflatable vehicle occupant protection device contained in the reaction canister;
   wherein at least one of the reaction canister and the inflatable vehicle occupant protection device is biodegradable and comprises a polyhydroxyalkanoate resin.
18. The vehicle occupant protection apparatus of item 17 wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate.
19. The vehicle occupant protection apparatus of item 17 wherein the reaction canister is biodegradable and comprises a polyhydroxyalkanoate resin.
20. The vehicle occupant protection apparatus of item 19 wherein the reaction canister is made from a composite, the composite comprising a continuous matrix of the polyhydroxyalkanoate resin reinforced with a biodegradable fiber.
21. The vehicle occupant protection apparatus of item 20 wherein the biodegradable fiber comprises a continuous fiber or a discontinuous fiber.
22. The vehicle occupant protection apparatus of item 20 wherein the biodegradable fiber comprises one of a plurality of continuous fibers and the continuous fibers are woven together.
23. The vehicle occupant protection apparatus of item 20 wherein the biodegradable fiber comprises one of a plurality of discontinuous fibers and the discontinuous fibers are bonded together to form a web.
24. The vehicle occupant protection apparatus of item 20 wherein the biodegradable fiber is a natural fiber or synthetic fiber.
25. The vehicle occupant apparatus of item 20 wherein the polyhydroxyalkanoate resin is a poly(3-hydroxybutyrate).
26. The vehicle occupant apparatus of item 25 wherein the biodegradable fiber is cotton.
27. The vehicle occupant apparatus of item 17 wherein the air bag is biodegradable and comprises polyhydroxyalkanoate resin.
28. The vehicle occupant protection apparatus of item 27 wherein the polyhydroxyalkanoate resin is in the form of polyhydroxyalkanoate fibers.
29. The vehicle occupant protection apparatus of item 28 wherein the polyhydroxyalkanoate fibers are woven or bonded together to form a biodegradable fabric.
30. The vehicle occupant apparatus of item 29 wherein the polyhydroxyalkanoate resin is poly(3-hydroxybutyrate-co-3-hydroxyvalerate).
31. The vehicle occupant protection apparatus of item 29 wherein the biodegradable fabric has a Mullen burst strength of at least about 1500 psi and an elastic modulus of about 10,000 psi to about 400,000 psi.
32. A vehicle occupant protection apparatus comprising a reaction canister wherein the reaction canister is biodegradable and comprises a polyhydroxyalkanoate resin.
33. The vehicle occupant protection apparatus of item 32 wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate.
34. The vehicle occupant protection apparatus of item 32 wherein the reaction canister further comprises a biodegradable fiber that reinforces the polyhydroxyalkanoate resin.
35. The vehicle occupant protection apparatus of item 32 wherein the reaction canister is made from a composite, the composite comprising a continuous matrix of the polyhydroxyalkanoate resin reinforced with a biodegradable fiber.
36. The vehicle occupant protection apparatus of item 34 wherein the biodegradable fiber comprises a continuous fiber or a discontinuous fiber.
37. The vehicle occupant protection apparatus of item 36 wherein the biodegradable fiber is one of a plurality of continuous fibers and the continuous fibers are woven together.
38. The vehicle occupant protection apparatus of item 36 wherein the biodegradable fiber is one of a plurality of discontinuous fibers and the discontinuous fibers are bonded together to form a web.
39. The vehicle occupant protection apparatus of item 34 wherein the biodegradable fiber is a natural fiber or a synthetic fiber.
40. The vehicle occupant apparatus of item 34 wherein the polyhydroxyalkanoate resin is a poly(3-hydroxybutyrate).
41. The vehicle occupant apparatus of item 40 wherein the biodegradable fiber is cotton.
42. A vehicle occupant protection apparatus comprising a vehicle occupant protection device wherein the vehicle occupant protection device is biodegradable and comprises a polyhydroxyalkanoate resin.
43. The vehicle occupant protection apparatus of item 42 wherein the polyhydroxyalkanoate resin is in the form of polyhydroxyalkanoate fibers.
44. The vehicle occupant apparatus of item 43 wherein the polyhydroxyalkanoate fibers are woven or bonded together to form a biodegradable fabric.
45. The vehicle occupant apparatus of item 43 wherein the polyhydroxyalkanoate resin is poly(3-hydroxybutyrate-co-3-hydroxyvalerate).
46. The vehicle occupant protection apparatus of item 43 wherein the biodegradable fabric has a Mullen burst strength of at least about 1500 psi and an elastic modulus of about 10,000 psi to about 400,000 psi.

## Claims

1. A vehicle component comprising a biodegradable material, said biodegradable material including a polyhydroxyalkanoate resin.

2. The vehicle component of claim 1 wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate,
and/ or wherein preferably the vehicle component is made from a composite, the composite comprising a continuous matrix of the polyhydroxyalkanoate resin reinforced with a biodegradable fiber,
and/ or wherein preferably the biodegradable fiber comprises a continuous fiber or a discontinuous fiber,
and/ or wherein preferably the biodegradable fiber comprises one of a plurality of continuous fibers and the continuous fibers are woven together,
and/ or wherein preferably the biodegradable fiber comprises one of a plurality of discontinuous fibers and the discontinuous fibers are bonded together to form a web.

3. The vehicle component of any of the preceding claims wherein the biodegradable fiber is a natural fiber or synthetic fiber,
and/ or wherein preferably the polyhydroxyalkanoate resin is a poly(3-hydroxybutyrate),
and/ or wherein preferably the biodegradable fiber is cotton,
and/ or wherein preferably the polyhydroxyalkanoate resin is in the form of polyhydroxyalkanoate fibers,
and/ or wherein preferably the polyhydroxyalkanoate fibers are woven or bonded together to form a biodegradable fabric,
and/ or wherein preferably the polyhydroxyalkanoate resin is selected from group consisting of poly(3-hydroxybutyrate-co-3-hydroxyvalerate) polyhydroxyoctanoate.

4. The vehicle component of any of the preceding claims wherein the biodegradable material is a biodegradable cellular material,
and/ or wherein preferably the biodegradable material further comprises a filler material,
and/ or wherein preferably the filler material imparts sound deadening properties to the biodegradable material,
and/ or wherein preferably the filler material is a naturally occurring mineral.

5. A vehicle occupant protection apparatus comprising:
a reaction canister; and
an inflatable vehicle occupant protection device contained in the reaction canister;
wherein at least one of the reaction canister and the inflatable vehicle occupant protection device is biodegradable and comprises a polyhydroxyalkanoate resin.

6. The vehicle occupant protection apparatus of any of the preceding claims wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate.
and/ or wherein preferably the reaction canister is biodegradable and comprises a polyhydroxyalkanoate resin,
and/ or wherein preferably the reaction canister is made from a composite, the composite comprising a continuous matrix of the polyhydroxyalkanoate resin reinforced with a biodegradable fiber,
and/ or wherein preferably the biodegradable fiber comprises a continuous fiber or a discontinuous fiber,
and/ or wherein preferably the biodegradable fiber comprises one of a plurality of continuous fibers and the continuous fibers are woven together.

7. The vehicle occupant protection apparatus of any of the preceding claims wherein the biodegradable fiber comprises one of a plurality of discontinuous fibers and the discontinuous fibers are bonded together to form a webs
and/ or wherein preferably the biodegradable fiber is a natural fiber or synthetic fiber.
and/ or wherein preferably the polyhydroxyalkanoate resin is a poly(3-hydroxybutyrate),
and/ or wherein preferably the biodegradable fiber is cotton,
and/ or wherein preferably the air bag is biodegradable and comprises polyhydroxyalkanoate resin.

8. The vehicle occupant protection apparatus of any of the preceding claims wherein the polyhydroxyalkanoate resin is in the form of polyhydroxyalkanoate fibers,
and/ or wherein preferably the polyhydroxyalkanoate fibers are woven or bonded together to form a biodegradable fabric,
and/ or wherein preferably the polyhydroxyalkanoate resin is poly(3-hydroxybutyrate-co-3-hydroxyvalerate),
and/ or wherein preferably the biodegradable fabric has a Mullen burst strength of at least about 1500 psi and an elastic modulus of about 10,000 psi to about 400,000 psi.

9. A vehicle occupant protection apparatus comprising a reaction canister wherein the reaction canister is biodegradable and comprises a polyhydroxyalkanoate resin.

10. The vehicle occupant protection apparatus of any of the preceding claims wherein the polyhydroxyalkanoate resin is a homo-polymer or copolymer of hydroxyalkanoate monomer units selected from the group consisting of 3-hydroxybutyrate, 3-hydroxyvalerate, 3-hydroxyoctanoate, 4-hydroxybutyrate, 5 5-hydroxyvalerate, 5-hydroxycaproate, 6-hydroxycaproate, 6-hydroxycaprylate, and 6-hydroxypropionate,
and/ or wherein preferably the reaction canister further comprises a biodegradable fiber that reinforces the polyhydroxyalkanoate resin,
and/ or wherein preferably the reaction canister is made from a composite, the composite comprising a continuous matrix of the polyhydroxyalkanoate resin reinforced with a biodegradable fiber,
and/ or wherein preferably the biodegradable fiber comprises a continuous fiber or a discontinuous fiber,
and/ or wherein preferably the biodegradable fiber is one of a plurality of continuous fibers and the continuous fibers are woven together.

11. The vehicle occupant protection apparatus of any of the preceding claims wherein the biodegradable fiber is one of a plurality of discontinuous fibers and the discontinuous fibers are bonded together to form a web,
and/ or wherein preferably the biodegradable fiber is a natural fiber or a synthetic fiber.
and/ or wherein preferably the polyhydroxyalkanoate resin is a poly(3-hydroxybutyrate).
and/ or wherein preferably the biodegradable fiber is cotton.

12. A vehicle occupant protection apparatus comprising a vehicle occupant protection device wherein the vehicle occupant protection device is biodegradable and comprises a polyhydroxyalkanoate resin.

13. The vehicle occupant protection apparatus of any of the preceding claims wherein the polyhydroxyalkanoate resin is in the form of polyhydroxyalkanoate fibers,
and/ or wherein preferably the polyhydroxyalkanoate fibers are woven or bonded together to form a biodegradable fabric,
and/ or wherein preferably the polyhydroxyalkanoate resin is poly(3-hydroxybutyrate-co-3-hydroxyvalerate),
and/ or wherein preferably the biodegradable fabric has a Mullen burst strength of at least about 1500 psi and an elastic modulus of about 10,000 psi to about 400,000 psi.
